(19) Europäisches Patentamt
European Patent Office
Office européen des brevets

(11) **EP 4 024 285 A1**

(12) **EUROPEAN PATENT APPLICATION**

(43) Date of publication:
**06.07.2022 Bulletin 2022/27**

(21) Application number: **21217866.9**

(22) Date of filing: **27.12.2021**

(51) International Patent Classification (IPC):
**G06N 3/04** *(2006.01)*    **G06N 3/08** *(2006.01)*

(52) Cooperative Patent Classification (CPC):
**G06N 3/08; G06N 3/04**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.12.2020   KR 20200188326
17.11.2021   KR 20210158515**

(71) Applicant: **Hyperconnect Inc.
Seoul 06164 (KR)**

(72) Inventors:
• **AHN, Sang Il
06164 Seoul (KR)**
• **YI, Joon Young
06164 Seoul (KR)**
• **KIM, Beom Su
06164 Seoul (KR)**
• **CHANG, Bu Ru
06164 Seoul (KR)**

(74) Representative: **Zimmermann & Partner
Patentanwälte mbB
Postfach 330 920
80069 München (DE)**

(54) **EMBEDDING NORMALIZATION METHOD AND ELECTRONIC DEVICE USING SAME**

(57)    A method of training a neural network model for predicting a click-through rate (CTR) of a user in an electronic device includes normalizing an embedding vector on the basis of a feature-wise linear transformation parameter, and inputting the normalized embedding vector into a neural network layer, wherein the feature-wise linear transformation parameter is defined such that the same value is applied to all elements of the embedding vector.

## FIG. 5

**Description**

CROSS-REFERENCE TO RELATED APPLICATION(S)

This application claims the benefit of Korean Patent Application No. 10-2020-0188326, filed on 30, December, 2020, in the Korean Intellectual Property Office, the disclosure of which is incorporated herein by reference.

TECHNICAL FIELD

The present disclosure relates to an embedding normalization method and an electronic device using the same. More specifically, the present disclosure relates to a method for training a neural network model while preserving importance of a feature vector.

DESCRIPTION OF THE RELATED ART

Artificial intelligence (AI) is being used in various industries. The AI, which operates in a manner similar to human thinking, may be utilized to extract features of objects for which a sample target is to approach.
Recently, research has been conducted to confirm the main interest on a specific object through a neural network model. When interest on a specific object is confirmed, it may be easily guided to a destination to be connected in the neural network model through the interest. Analysis on the interest may be improved by controlling various stages in training of the neural network model, and a method of assigning high importance on main interest and extracting the main interest may be utilized.

SUMMARY

TECHNICAL GOAL

Learning interaction between feature vectors with respect to a specific target may be a fundamental matter in click-through rate (CTR) prediction. Factorization machine (FM), which simultaneously considers primary and secondary feature interactions, may be the most representative model in performance of CTR prediction. The primary feature interaction may refer to interaction in an individual feature itself, and the secondary feature interaction may refer to a pair-wise interaction between features. For example, attentional factorization machine (AFM) may utilize an attention mechanism to automatically capture importance of the feature interaction. Recently, neural factorization machine (NFM), Wide&Deep, DeepFM, xDeepFM, product-based neural network (PNN), automatic feature interaction learning (AutoInt), and AFN have been utilized to model high-level feature interaction through a deep neural network.
Recently, various attempts have been made to apply a normalization method to the performance of the CTR prediction. NFM, AFN, and AutoFIS may reliably perform element training of the deep neural network by utilizing a batch normalization (BN) method. In order to train a CTR prediction model, PNN and MINA utilize a layer normalization (LN) method.
The CTR prediction model to which the normalization method is applied does not preserve importance of feature embedding but considers stability of the element training of the deep neural network. That is, when normalization for individual elements is performed, the BN and the LN do not reflect a weight for importance because of using a constant parameter in the same dimension. When a result value through a normalized value does not reflect the importance, the accuracy of prediction of the CTR may be lowered.

TECHNICAL SOLUTIONS

According to an aspect there is provided a method of training a neural network model for predicting a CTR of a user in an electronic device, which includes normalizing an embedding vector on the basis of a feature-wise linear transformation parameter, and inputting the normalized embedding vector into a neural network layer. The feature-wise linear transformation parameter may be defined such that the same value is applied to all elements of the embedding vector.
The normalizing may include calculating a mean of the elements of the embedding vector, calculating a variance of the elements of the embedding vector, and normalizing the embedding vector on the basis of the mean, the variance, and the feature-wise linear transformation parameter.
The feature-wise linear transformation parameter may include a scale parameter and a shift parameter.
Each of the scale parameter and the shift parameter may be a vector having the same dimension as the embedding vector, and all elements thereof may have the same value.

Each of the scale parameter and the shift parameter may have a scalar value.

According to an aspect there is provided a neural network system for predicting a CTR of a user implemented by at least one electronic device, which includes an embedding layer, a normalization layer, and a neural network layer

The embedding layer may map a feature included in a feature vector to an embedding vector, the normalization layer may normalize the embedding vector on the basis of a feature-wise linear transformation parameter, the neural network layer may perform a neural network operation on the basis of the normalized embedding vector, and the feature-wise linear transformation parameter may be defined such that the same value is applied to all elements of the embedding vector.

The normalization layer may calculate a mean of the elements of the embedding vector, calculate a variance of the elements of the embedding vector, and normalize the embedding vector on the basis of the mean, the variance, and the feature-wise linear transformation parameter.

The feature-wise linear transformation parameter may include a scale parameter and a shift parameter.

Each of the scale parameter and the shift parameter may be a vector having the same dimension as the embedding vector, and all elements thereof may have the same value.

Each of the scale parameter and the shift parameter may have a scalar value.

EFFECTS

Unlike a variance-only layer normalization (VO-LN) which is being studied to overcome a limitation, the EN method according to various embodiments of the present disclosure may perform calculation on the basis of a parameter to which a weight for a feature vector is reflected. Values normalized on the basis of a parameter calculated by the EN may be widely used in model classes of various neural networks (for example, a deep neural network and a shallow neural network) and may reflect a weight for importance.

In accordance with the EN method according to various embodiments of the present disclosure, the electronic device may preserve importance of the feature vector to improve performance of a CTR prediction model. A BN method or an LN method may excessively equalize a norm of feature embedding and potentially harm performance of a model. However, the EN method of the present disclosure may explicitly model a norm of individual feature embedding to rapidly perform variance and convergence of importance for individual feature, thereby increasing accuracy of the CTR. The EN method explicitly preserves a significance of each feature embedding by training separate parameters capturing the significance of each feature embedding and shows consistent performance improvement in various CTR prediction datasets and models.

BRIEF DESCRIPTION OF THE DRAWINGS

These and/or other aspects, features, and advantages of the invention will become apparent and more readily appreciated from the following description of example embodiments, taken in conjunction with the accompanying drawings of which:

FIG. 1 is a schematic block diagram illustrating a feature of an electronic device according to various example embodiments of the present disclosure;

FIG. 2 is a schematic flowchart illustrating an embedding normalization method according to various example embodiments of the present disclosure;

FIG. 3 is a schematic diagram illustrating a structure of a neural network training model including an embedding normalization (EN) layer according to various example embodiments of the present disclosure;

FIG. 4 is an example diagram illustrating performance of EN on a feature vector according to various example embodiments of the present disclosure;

FIG. 5 is a schematic diagram illustrating a structure of the performance of the EN on the feature vector according to the various example embodiments of the present disclosure; and

FIG. 6 is a detailed example diagram illustrating normalized values according to execution of an EN process of FIG. 4.

DETAILED DESCRIPTION

The terms used in the example embodiments are selected, as much as possible, from general terms that are widely used at present while taking into consideration the functions obtained in accordance with the present disclosure, but these terms may be replaced by other terms based on intentions of those skilled in the art, customs, emergence of new technologies, or the like. Also, in a particular case, terms that are arbitrarily selected by the applicant of the present disclosure may be used. In this case, the meanings of these terms may be described in corresponding description parts of the disclosure. Accordingly, it should be noted that the terms used herein should be construed based on practical meanings thereof and the whole content of this specification, rather than being simply construed based on names of the terms.

Throughout this disclosure, when an element is referred to as "comprising" a component, it refers that the element can further include other components, not excluding the other components unless specifically stated otherwise. In addition, the term "~ part","~ module," or the like disclosed herein means a unit for processing at least one function or operation, and this unit may be implemented by hardware, software, or a combination of hardware and software.

The expression "at least one of A, B, and C" may include the following meanings: A alone; B alone; C alone; both A and B together; both A and C together; both B and C together; and all three of A, B, and C together.

A "terminal" referred below may be implemented as a computer or a portable terminal, which is capable of accessing a server or another terminal through a network. Here, the computer includes, for example, a notebook, a desktop, and a laptop, on which a web browser is installed, and the portable terminal is, for example, a wireless communication device which secures portability and mobility and may include terminals based on communication such as international mobile telecommunication (IMT), code division multiple access (CDMA), wide-code division multiple access (W-CDMA), and long term evolution (LTE), and wireless communication devices based on all types of handheld devices such as smartphones and tablet personal computers (PCs).

Example embodiments of the present disclosure will be fully described in a detail below which is suitable for implementation by those skilled in the art with reference to the accompanying drawings. However, the present disclosure may be implemented in various different forms, and thus it is not limited to embodiments to be described herein.

Hereinafter, example embodiments of the present disclosure will be described in detail with reference to the accompanying drawings.

In describing the example embodiments, descriptions of technical contents which are well known in the technical field to which the present disclosure pertains and are not directly related to the present disclosure will be omitted herein. This is to more clearly convey the gist of the present disclosure by omitting unnecessary descriptions.

For the same reason, some components in the accompanying drawings are exaggerated, omitted, or schematically illustrated. In addition, a size of each component does not fully reflect an actual size. In each of the accompanying drawings, the same or corresponding components are assigned the same reference numerals.

The advantages and features of the present disclosure and the manner of achieving the advantages and features will become apparent with reference to the embodiments described in detail below with the accompanying drawings. The present disclosure may, however, be implemented in many different forms and should not be construed as being limited to the embodiments set forth herein, and the embodiments are provided such that this disclosure will be thorough and complete and will fully convey the scope of the present disclosure to those skilled in the art, and the present disclosure is defined by merely the scope of the appended claims. The same reference numerals refer to the same components throughout this disclosure.

In this case, it will be understood that each block of flowchart diagrams and combinations of the flowchart diagrams may be performed by computer program instructions. These computer program instructions may be embodied in a processor of a general purpose computer, a special purpose computer, or other programmable data processing equipment such that the instructions performed by the processor of the computer or other programmable data processing equipment generate parts for performing functions described in flowchart block(s). These computer program instructions may use a computer or other programmable data processing equipment for implementing a function in a specific manner or may be stored in a computer readable memory, and thus the instructions which use the computer or are stored in the computer readable memory may produce a manufacturing article including instruction parts for performing the functions described in the flowchart block(s). Since the computer program instructions can also be embedded in the computer or other programmable data processing equipment, instructions, which a series of operations are performed on the computer or other programmable data processing equipment to generate a computer-executed process, thereby operating the computer or other programmable data processing equipment, can provide operations for performing the functions described in the flowchart block(s).

In addition, each block may represent a module, segment, or a portion of a code, which includes one or more executable instructions for executing specified logical function(s). It should also be noted that, in some alternative embodiments, it is also possible for the functions mentioned in the blocks to occur out of the order. For example, two blocks shown in succession can be substantially performed simultaneously or, in sometimes, the two blocks can be performed in the reverse order according to corresponding functions.

Artificial intelligence (AI) may be a type of computer program which mimics human intelligence through a series of logical algorithms which think, learn, and determine like humans. The AI may process complicated operations in a processor corresponding to the human brain through a neural network which resembles the human nervous system. Machine learning capable being included in deep learning and a process of normalizing and modeling a feature through another learning will be described herein. In this disclosure, the terms machine learning and machine training may be used interchangeably.

The neural network may refer to a network in which an operation principle of a neuron, which is a basic unit of the human nervous system, and a connection relationship between neurons are modeled. The neural network may be a data processing system in which individual nodes or processing elements are connected in the form of layers. The neural network may include a plurality of layers, and each layer may include a plurality of neurons. In addition, the neural network may include a synapse corresponding to a nerve stimulator capable of transmitting data between the neurons. In this disclosure, the terms layer and class may be used interchangeably.

Specifically, the neural network may generally refer to a data processing model in which artificial neurons varies bonding strength of the synapse through repetitive learning to have the ability of solving a given matter or a matter in which a variable occurs. In this disclosure, the terms neural network and artificial neural network may be used interchangeably.

The neural network may be trained using training data. Specifically, the training may include a process of determining parameters of the neural network using feature data so as to achieve objectives such as classification, regression analysis, and clustering of input data. More specifically, a factor for determining a parameter may include a weight or a bias.

The neural network may be trained using input data to classify or cluster the input data according to a pattern, the trained neural network may be referred to as a trained model. Specifically, a training method may be classified into supervised learning, non-supervised learning, semi-supervised learning, and reinforced learning. More specifically, the supervised learning may be a method, which is a type of machine learning, of inferring functions from the training data. Outputting a continuous result value among the functions inferred through the machine learning may be the regression analysis, and outputting a result value by predicting a class of input data may be the classification.

In the supervised learning, a label may be given to the training data, and the label may include a meaningful result value which the neural network should infer. Specifically, the result value which the neural network should infer may be labeling data. More specifically, the training data and the labeling data corresponding to the training data may be configured as one training set, and the neural network may acquire an input value and a result value in the form of the training set.

The training data may include a plurality of feature vectors, and the neural network may infer the training data and put a label on an individual feature vector to output the labeling data as the result value. The neural network may infer a function with respect to correlation between pieces of data through the training data and the labeling data. In addition, a parameter with respect to the individual vector may be optimized through feedback on the function inferred from the neural network.

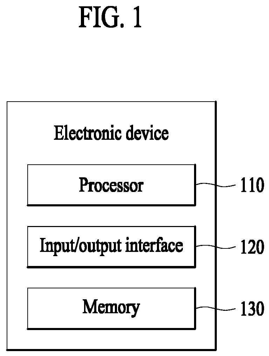

FIG. 1 is a schematic block diagram illustrating a feature of an electronic device according to various example embodiments of the present disclosure.

The electronic device may include a device including a neural network. The electronic device is a device capable of performing machine learning using training data and may include a device capable of performing learning using a model formed of a neural network. For example, the electronic device may be formed to receive, classify, store, and output data to be used for data mining, data analysis, intelligent decision making, and a machine learning algorithm.

The electronic device may include various devices for training the neural network. For example, the electronic device may be implemented as a plurality of server sets, a cloud server, or a combination thereof. Specifically, the electronic device may acquire a result value from data analysis or training through variance processing.

Referring to FIG. 1, the electronic device may include a processor 110, an input/output (I/O) 120, and a memory 130 as components. The components of the electronic device shown in FIG. 1 are not limited thereto and may be added or replaced.

The processor 110 may control or predict an operation of the electronic device through data analysis and a machine learning algorithm. The processor 110 may request, retrieve, receive, or utilize data and control the electronic device to execute a desired operation which is learned through training.

The processor 110 may be formed to derive and detect a result value with respect to an input value on the basis of a user input or a natural language input. The processor 110 may be formed to collect data for processing and storage. The collection of the data may include sensing of data through a sensor, extracting of data stored in the memory 130, or receiving of data from an external device through the I/O interface 120.

The processor 110 may convert an operation history of the electronic device into data and store the data in the memory 130. The processor 110 may acquire the best result value for performing a specific operation on the basis of the stored operation history data and a trained model.

When the specific operation is performed, the processor 110 may analyze a history according to execution of the specific operation through data analysis and a machine learning algorithm. Specifically, the processor 110 may update previously trained data on the basis of the analyzed history. That is, the processor 110 may improve accuracy of the data analysis and the machine learning algorithm on the basis of the updated data.

The I/O interface 120 may perform a function of transmitting data stored in the memory 130 of the electronic device or data processed by the processor 110 to another device or a function of receiving data from another device to the electronic device.

The processor 110 may train (for example, learning) the neural network using the training data or the training data set. For example, the processor 110 may train the neural network through data obtained by preprocessing the acquired input value. As another example, the processor 110 may train the neural network through preprocessed data stored in the memory 130. Specifically, the processor 110 may determine an optimization model of the neural network and parameters used for optimization by repeatedly training the neural network using various training methods.

The memory 130 may store a model trained in the processor 110 or the neural network. For example, the memory 130 may distinguish and store the trained model from the training model. Specifically, the memory 130 may store models in a process in which the neural network is trained to store a trained model according to the training history. In addition, the memory 130 may store a model which the trained model is updated.

The memory 130 may store input data which is an input value, training data for model training, and model training history data. The input data stored in the memory 130 may be data processed suitable for the model training and raw data which is not processed.

According to an example embodiment, normalization of the neural network model learned by the processor 110 may be performed by a method of batch normalization (BN), a method of layer normalization (LN), or a method using the above methods. The normalization may include a process of processing data using parameters, and a process of distributing an individual feature vector corresponding to a characteristic of individual data and normalizing the individual feature vector through a mean and a parameter (for example, a first parameter or a second parameter) will be described herein. In particular, the normalization described herein may be referred to as embedding normalization (EN).

According to an example embodiment, the normalization may derive a result value capable of extracting a feature from the feature vector more quickly, and in particular, the normalization may be utilized to train a model for predicting a click-through rate (CTR). The CTR may refer to a probability in which a user may click on a feature of interest. When prediction of the CTR is performed using a BN method or an LN method, accuracy of the prediction may be degraded. The EM may stably train the neural network model and increase the prediction accuracy of the CTR. More specifically, a model of the example embodiment may increase a learning rate of the model while maintaining importance of each feature during a learning process and increase stability according to repeated learning. In addition, according to the present disclosure, since the importance of the feature is preserved during the learning process, performance improvement may be achieved in a deep learning model as well as even in CTR prediction models without neural elements such as a factorization machine (FM) and a field-aware factorization machine (FFM).

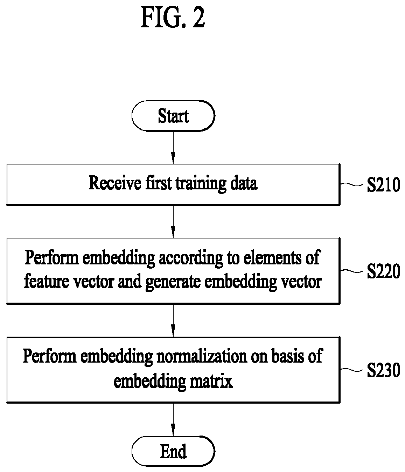

FIG. 2 is a schematic flowchart illustrating an EN method according to various example embodiments of the present disclosure.

In operation S210, the electronic device may receive first training data. The training data may include a feature vector. The feature vector may include each feature. The electronic device may acquire the feature vector as input data for training the neural network model. The feature vector may include each feature such as an element for a user and an element for an item. For example, in the feature, the element for the user may indicate an age of the user, gender thereof, a platform access time, a click log in a platform, and a platform usage history. The platform may be an online platform accessed by the user. As another example, the element for the item may include a type of content in the platform, a feature of the content, and an arrangement region of the content. The content may be a notice posted in the platform. The feature vector may be $x = \{x_1, x_2, x_3, x_n\}$ (n is a natural number), and elements $x_1$ to $x_n$ of the feature vector may correspond to the features.

According to an example embodiment, the electronic device may map individual features to the embedding vector. The mapping may refer to performing of embedding for each feature. The mapped embedding vector may be mapped to $e_1, e_2, e_3, e_4, \ldots, e_n$ by corresponding to each feature. For example, the electronic device may perform an embedding lookup on the features $x_1$ to $x_n$ included in the feature vector x to map the features $x_1$ to $x_n$ to the corresponding embedding vectors $e_1$ to $e_n$. In this case, each of the embedding vectors $e_1$ to $e_n$ may be a vector in a d dimension (d is a natural number).

According to various embodiments, the electronic device may map a first element of the feature vector to a first embedding vector and map a second element of the feature vector to a second embedding vector. That is, n features included in the embedded feature vector may be mapped to the first to $n^{th}$ embedding vectors, respectively. The embedding vector in which each feature (for example, an $i^{th}$ element) of the feature vector is mapped may be referred to as an $i^{th}$ embedding vector.

The embedding vector may be a learnable parameter. As learning of the neural network model proceeds, the embedding vector may be learned such that the neural network model may perform its intended purpose.

In operation S220, the electronic device may acquire an embedding matrix by embedding the feature vector.

The electronic device may generate an input matrix by embedding the feature vector. For example, the input matrix may include a result of embedding a number of feature vectors corresponding to a batch size. That is, when the feature vector is n dimensions, the embedding vector is d dimensions, and the batch size is b, the input matrix may have a size of b*n*d.

In operation S230, the electronic device may normalize the embedding vector on the basis of the embedding matrix. The electronic device may output an embedding matrix E consisting of embedding vectors through embedding on the feature vectors. The embedding matrix E may be an input matrix.

According to an example embodiment, the normalization may be performed on the embedding vector. The electronic device may perform the normalization such that importance (for example, a norm) of each embedding vector is preserved. In the related art, a magnitude (norm) of each embedding vector tends to be equalized due to the normalization so that the matters such as weight loss (gradient vanishing) or weight exploding (gradient exploding) may occur. However, the electronic device of the present disclosure may prevent such matters from occurring.

According to an example embodiment, the electronic device may perform the normalization on the embedding vector on the basis of a linear transformation parameter. The linear transformation parameter may include a scale parameter and a shift parameter. Each of the scale parameter and the shift parameter may be expressed as a vector having the same dimension as the embedding vector. In addition, all elements of the scale parameter and the shift parameter may have the same value. That is, when the normalization is performed, the electronic device may apply the scale parameter and the shift parameter, which have the same value, to each element of the embedding vector.

According to an example embodiment, the EN may apply the scale parameter and the shift parameter which have the same value corresponding to the same dimension on the basis of all the elements of the individual embedding vectors. That is, the electronic device may equally apply linear transformation parameter values applied to all the elements with respect to the same index of the embedding vector. This may be different from setting a dimension-wise parameter when the LN is performed.

According to an example embodiment, the EN of the present disclosure may define a the linear transformation parameter such that the same scale parameter value and the same shift parameter value are applied to all elements of one embedding vector so that the normalization may be performed to preserve importance of the embedding vector. That is, the electronic device may perform the normalization on each embedding vector on the basis of the feature-wise linear transformation parameter. The feature-wise linear transformation parameter may include a scale parameter and a shift parameter. The electronic device may perform the normalization on the basis of the scale parameter and the shift parameter which are defined as the same scalar value for all the elements of the embedding vector.

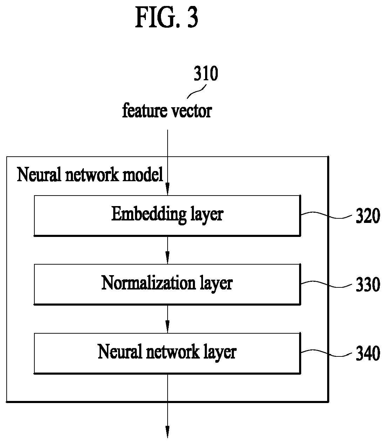

FIG. 3 is a schematic diagram illustrating a structure of a neural network model including an EN layer according to various example embodiments of the present disclosure. FIG. 3 illustrates a process in which a feature vector 310 is input to the neural network model and a result value is output.

According to an example embodiment, the neural network system may include a plurality of neural network layers arranged in a sequence from the lowest layer to the highest layer in the sequence. The neural network system may generate neural network outputs from neural network inputs by processing the neural network inputs through respective layers of a sequence. The neural network system may receive input data and generate a score for the input data. For example, when the input data of the neural network system is a feature corresponding to a feature extracted from content, the neural network system may output a score for each object category. The score for each object category may indicate a selection probability in which the content includes a feature of an object included in a category. As another example, when the input data with respect to the neural network system is a feature of an image for an article in a specific platform, the neural network system may indicate a possibility in which the image for the article in the specific platform is selected.

According to an example embodiment, the neural network model may receive the feature vector 310 as input data and output a result value through an embedding layer 320, a normalization layer 330, and a neural network layer 340. In this case, the feature vector 310 may be an output of a lower layer not shown in FIG. 3, and the neural network layer 340 may include a plurality of neural network layers.

The embedding layer 320 may perform the embedding on the feature vector 310. The embedding layer 320 may generate an input matrix including the embedding vector by mapping each feature included in the feature vector 310 to the embedding vector. The embedding operation of the embedding layer 320 may be performed in the same manner as the embedding operation described in operation S220 of FIG. 2.

The normalization layer 330 may perform the normalization on the embedding vector included in the input matrix. According to an example embodiment, the normalization may be performed according to Equation 1 below.

Equation 1

$$\widehat{e_x} = \gamma_x \odot \left( \frac{e_x - \mu_x}{\sqrt{\sigma_x^2 + \epsilon}} \right) + \beta_x$$

In Equation 1, $e_x$ denotes an embedding vector corresponding to a feature x included in the feature vector 310, and $\widehat{e_x}$ may be a normalized embedding corresponding to the feature x. $\odot$ may refer to an element-wise multiplication operation. $\epsilon$ is a relatively small scalar value and may be added to the variance to prevent overflow when the normalization is performed.

In Equation 1, $\mu_x$ and $\sigma_x^2$ may be a mean and a variance of elements of the embedding vector ex, respectively. $\mu_x$ and $\sigma_x^2$ may be calculated as in Equations 2 to 5, respectively. In Equations 2 to 5, $(e_x)_k$ denotes a $k^{th}$ element of the embedding vector $e_x$, and d denotes a dimension of the embedding vector $e_x$ (that is, a number of elements).

Equation 2

$$\mu_x = \frac{1}{d} \sum_k (e_x)_k$$

Equation 3

$$\sigma_x^2 = \frac{1}{d} \sum_k ((e_x)_k - \mu_x)^2$$

Equation 4

$$\mu_x = 1 \cdot \mu_x$$

Equation 5

$$\sigma_x^2 = 1 \cdot \sigma_x^2$$

In Equation 1, $\gamma_x$ and $\beta_x$ may be linear transform parameters. $\gamma_x$ and $\beta_x$ may be a scale parameter and a shift parameter, respectively. $\gamma_x$ and $\beta_x$ may be set as shown in Equations 6 and 7 below, respectively, and $\gamma x$ and $\beta x$ may be learnable parameters. That is, each of the parameters $\gamma_x$ and $\beta_x$ to be learned is a vector having the same dimension as the embedding vector, and all elements thereof may be learned parameters of $\gamma_x^f$ and $\beta_x^f$.

Equation 6

$$\gamma_x = 1 \cdot \gamma_x^f$$

Equation 7

$$\beta_x = 1 \cdot \beta_x^f$$

According to an example embodiment, the electronic device may perform the normalization operation of the normalization layer 330 described with reference to Equations 1 to 7 in a manner expressed as Equation 8.

Equation 8

$$EN(e_x) = \gamma_x^f \left( \frac{e_x - \mu_x}{\sqrt{\sigma_x^2 + \epsilon}} \right) + \beta_x^f,$$

$$\mu_x = \frac{1}{d} \sum_k (e_x)_k, \quad \sigma_x^2 = \frac{1}{d} \sum_k ((e_x)_k - \mu_x)^2.$$

In Equation 8, $e_x$ may be the embedding vector, d may be the dimension of the embedding vector, $\mu_x$ may be the mean of all the elements of the embedding vector, $\sigma_x^2$ may be the variance of all the elements of the embedding vector, $(e_x)_k$ may be the $k^{th}$ element of the embedding vector $e_x$, and $\gamma_x^f$ and $\beta_x^f$ be the linear transformation parameters for each feature.

The linear transformation parameters $\gamma_x^f$ and $\beta_x^f$ for each feature may be learnable parameters. Each of the linear transformation parameters $\gamma_x^f$ and $\beta_x^f$ for each feature may have a scalar value. During the normalization process, the linear transformation parameters $\gamma_x^f$ and $\beta_x^f$ for each feature may be defined such that the same value is applied to all the elements of the embedding vector. In addition, the electronic device may perform the normalization on the embedding vector on the basis of the mean, the variance, and the linear transformation parameters for each feature of the elements of the embedding vector.

According to an example embodiment, the embedding vector normalized through the EN may have a relatively larger norm between the embedding vectors. Specifically, the embedding vector normalized by the EN may be distinguished by a large difference in size (norm) depending on a corresponding feature vector. Accordingly, the embedding vector normalized by the EN allows to easily confirm different importance of the feature vectors.

Even when there is no additional variation in model architecture or training process, the electronic device according to the example embodiment may utilize the EN together with the embedding on the feature. Specifically, in order to represent a given feature, the EN may be integrated into all types of CTR prediction models using feature embedding, and thus the EN has high application versatility.

According to various example embodiments, the electronic device may train the neural network model using the embedding vector normalized by embedding through the embedding layer 320 and the normalization layer 330 as an input of the neural network layer 340. Accordingly, the electronic device may acquire a result value for the feature vector 310 as an output.

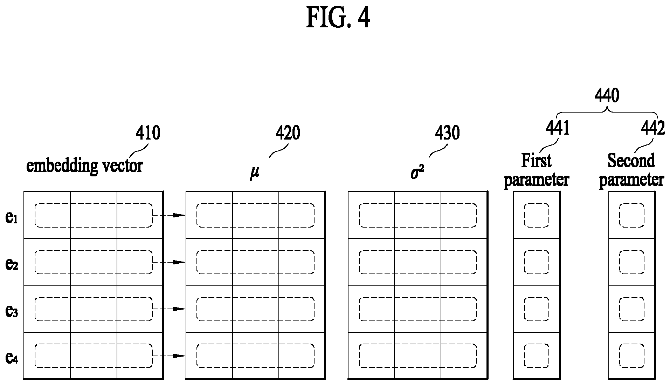

FIG. 4 is an example diagram illustrating performance of EN on a feature vector according to various example embodiments of the present disclosure.

According to various example embodiments, the electronic device may perform CTR prediction by utilizing a function having very high cardinality and very high sparsity. Cardinality may refer to the number of tuples constituting one relation and refer to the number of unique values of a specific data set. For example, when data is a set related to "gender," the cardinality for "gender" may be set to two due to distinction between "male" and "female." Specifically, when an attribute value related to a given list in a data set is referred to as a tuple, and the number of tuples may correspond to cardinality. Since the elements of the feature vector may differently contribute to the prediction of the CTR of the neural network model, the electronic device may need to perform a function of clearly distinguishing importance of a embedding vector 410. The result of the EN with respect to the feature vector may naturally imply importance of a corresponding feature vector.

Referring to FIG. 4, the electronic device may acquire the embedding vector 410 as an input in a unit of an index i of the same element. For example, the electronic device may acquire the elements of $e_1$, $e_2$, $e_3$, and $e_4$ of the

embedding vector 410 corresponding to the features $x_1$, $x_2$, $x_3$, and $x_4$ as inputs according to a first index, a second index, a third index, and a fourth index which are individual indexes. That is, the electronic device may confirm a relation with respect to the embedding vector 410 to utilize cardinality and sparsity. When the EN is performed on each element of the individual embedding vector 410, the electronic device may clearly distinguish the importance of each embedding vector 410 using the feature-wise linear transformation parameter.

According to various example embodiments, the electronic device may perform the EN on the embedding vector 410 through a mean 420 and a variance 430 of the elements of the embedding vector 410 and a parameter 440. The parameter 440 is the feature-wise linear parameter, and when the normalization is performed on the embedding vector 410, the parameter 440 may be set such that the same value is used for all the elements of one embedding vector 410 for each feature.

According to an example embodiment, the parameter 440 may include a first parameter 441 and a second parameter 442. Here, the first parameter 441 may correspond to the scale parameter, and the second parameter 442 may correspond to shift parameter. Each of the first parameter 441 and the second parameter 442 may be a vector in the same dimension as the embedding vector 410, and all elements thereof may have the same value. Accordingly, when the embedding vector 410 has the same index, the electronic device may perform the normalization by applying the same parameter value to all elements of the same index.

According to an example embodiment, the electronic device may perform CTR prediction through an FM which is a representative recommendation system model. In particular, the prediction made in the FM using the EN according to the present disclosure by the electronic device may be derived as in Equation 9 below.

Equation 9

$$\hat{y}_{FM}(\mathbf{x}) = w_0 + \sum_{i=1}^{n} w_{x_i} + \sum_{i=1}^{n} \sum_{j=i+1}^{n} \hat{e}_{x_i} \cdot \hat{e}_{x_j}$$

In Equation 9, $w_0$ refers to a global bias, and $w_{xi}$ may be a weight for modeling primary interaction of $x_i$, which is an element of an $i^{th}$ feature vector. $\widehat{e_{xi}}$ and $\widehat{e_{xj}}$ may be normalized embeddings corresponding to $x_i$ and $x_j$.

According to an example embodiment, it may be assumed that a feature x' is independent from a click label y and does not include a useful signal with respect to y. For example, the feature x' may not be significant for predicting y so that a dot product term of a normalized value may be zero for all feature vectors. That is, the dot product may correspond to zero with respect to a feature vector with low importance. When the dot product is not calculated as zero for a feature vector with low importance, noise may occur when the electronic device trains the neural network model.

According to an example embodiment, the electronic device may derive an embedding vector and an embedding matrix including the embedding vector through the EN for the feature vector. In order to satisfy a separate constraint condition (for example, a condition in which a dot product becomes zero) for the embedding vector 410, the electronic device may perform a process of identifying other orthogonal elements. Such a constraint may allow a d-1 dimension in which embeddings for different feature are orthogonal to each other to be utilized to reduce an effective dimension of an embedding space and harm a model capacity.

The existing normalization method may have a side effect of equalizing importance for each element of different feature vectors. The electronic device of the present disclosure may perform the EN by applying the feature-wise linear transformation parameter as the same value with respect to all elements, thereby clearly preserving the meaning of individual feature vectors for clear determination of importance while taking advantage of the BN or the LN.

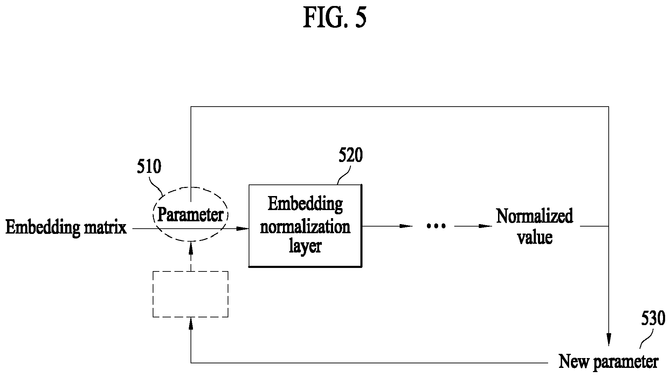

FIG. 5 is a schematic diagram illustrating a structure of the performance of the EN on the feature vector according to the various example embodiments of the present disclosure.

According to various embodiments, the electronic device may train the neural network model through an embedding matrix including an embedding vector in which a feature vector included in the training data is embedded.

In the training through the neural network model, the electronic device may perform the normalization on the embedding matrix using the normalization layer 520. A result value obtained by normalizing the embedding matrix for the training data may be expressed as a normalized value. The normalized value may be acquired by applying a parameter 510 (for example, the parameter 440 of FIG. 4) in the normalization layer 520. The parameter 510 which the electronic device applies to the normalization layer 520 so as to train the neural network may correspond to gamma (for example, the first parameter 441 of FIG. 4) and beta (for example, the second parameter 442 of FIG. 4). In addition, a new parameter 530 generated on the basis of the parameter 510 and the normalized value may correspond to a new gamma value and a new beta value. The electronic device may apply the new parameter 530 to other training data to perform the EN. According to various example embodiments, during the training in the neural network model, the electronic device may acquire the new parameter 530 through back propagation.

According to an example embodiment, the electronic device may apply the same parameter to each individual element of the embedding vector, thereby reflecting a weight. For example, a weight for a feature vector, which has high importance and which is expected to be selected because of high interest of a user among the feature vectors and is led to a click, may be determined to be high. That is, in the EN, parameters applied to the individual elements of the embedding vector may be determined by iterative training. The electronic device may optimize the normalization parameter (the parameter 440 of FIG. 4) which iteratively trains the neural network model to be applied to the embedding matrix.

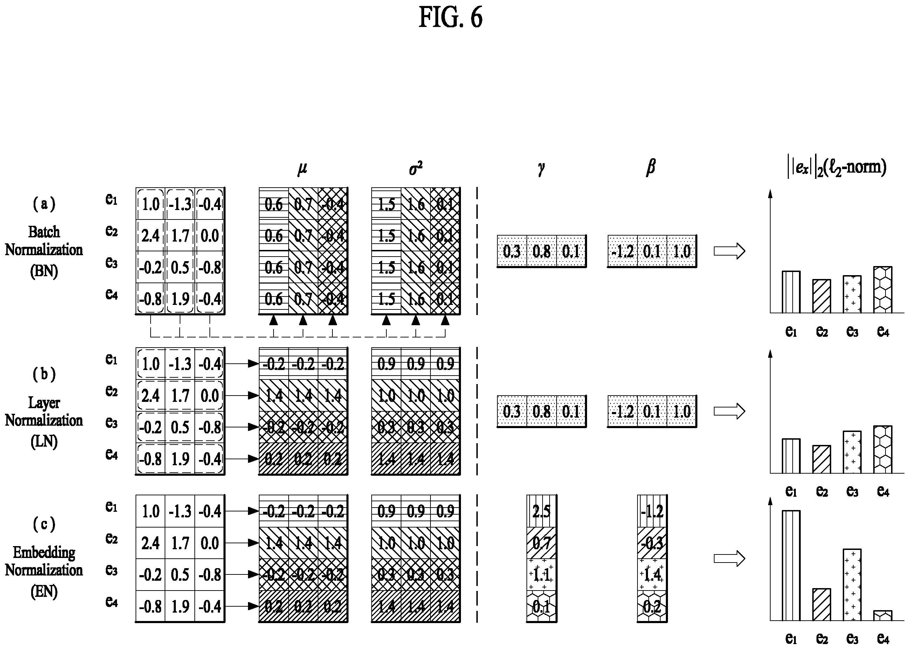

FIG. 6 is a detailed example diagram illustrating normalized values according to execution of an EN process of FIG. 4. Referring to FIG. 6, results of normalized values through the BN method and the LN method may be compared together with the EN method of FIG. 4.

According to an example embodiment, the EN method of the present disclosure may be used together with an embedding technique which maps features to an embedding vector in a latent space. For example, with respect to x which is given input data, the electronic device may embed the feature vector x to generate an input matrix E including the embedding vector e. For example, the feature vector x may include the features $x_1$, $x_2$, $x_3$, and $x_4$ as respective elements.

Referring to the rightmost graph of FIG. 6, values normalized by the BN (FIG. 6A) the LN (FIG. 6B) do not reflect the weights of the individual elements and thus do not exhibit a difference in importance. On the other hand, the values normalized by the EN method of FIG. 6C reflect the weights of the individual elements so that importance may be sufficiently confirmed at $e_1$ and $e_3$. The EN method may acquire a high-accuracy result value at a learning rate that is faster than a learning rate of the BN or the LN for the same input data, and as shown in FIG. 6, this is compared in terms of accuracy in other normalization methods.

Referring to FIG. 6, the electronic device may generate a first normalized value on the basis of the first parameter and the second parameter according to the first index for elements in all dimensions included in the first embedding vector in the EN layer. For example, the first embedding vector $e_1$ may be an embedding vector to which $x_1$ is mapped, and the first embedding vector may include 1.0, -1.3, and -0.4 as each element in each dimension. Here, 1.0 may correspond to a one-dimensional element of the first embedding vector, -1.3 may correspond to a two-dimensional element, and -0.4 may correspond to a three-dimensional element.

According to an example embodiment, the electronic device may calculate a mean and a variance of elements of each of the first embedding vector and the second embedding vector. Referring to FIG. 6, the electronic device may calculate a mean and a variance of the embedding vector $e_1$ to which $x_1$ is embedded. A mean and a variance of the EN are calculated according to the individual elements and correspond to the mean and the variance of the individual embedding vector in all dimensions. For example, in the EN of FIG. 6, the mean and the variance of the elements of the first embedding vector are calculated as -0.2 and 0.9, respectively.

According to an example embodiment, the first parameter and the second parameter are vectors in the same dimension, and all elements thereof may have the same value in all dimensions of the first index. Referring to FIG. 6, a value corresponding to the first index of gamma, which is the first parameter, is 2.5. In addition, A value corresponding to the first index of beta, which is the second parameter, is -1.2. When the EN is performed, the electronic device may apply the first parameter and the second parameter, which correspond to element indexes of an individual embedding vector (for example, an element index of the first embedding vector is 1, and an element index of the second embedding vector is 2) to the elements of all dimensions of the individual embedding vector as the same value.

Meanwhile, in the present specification and the accompanying drawings, the example embodiments of the present disclosure have been disclosed, and although specific terms are used, these are used in a general sense to easily describe the technical contents of the present disclosure and help understanding of the present disclosure, these specific terms are not intended to limit the scope of the present disclosure. In addition to the example embodiments disclosed herein, it is obvious to those skilled in the art to which the present disclosure pertains that other modifications can be implemented on the basis of the technical spirit of the present disclosure.

The electronic device or terminal device according to the above-described example embodiments may include interface devices such as a processor, a memory for storing and executing program data, a permanent storage such as a disk drive, a communication port for communicating with an external device, a touch panel, and a key button. Methods implemented as software modules or algorithms may be computer-readable codes or program instructions executable on the processor and may be stored on a computer-readable recording medium. Here, the computer-readable recording medium includes a magnetic storage medium (for example, a read-only memory (ROM), a random-access memory (RAM), a floppy disk, and a hard disk) and an optically readable medium (for example, a compact disc (CD)-ROM) and a digital versatile disc (DVD). The computer-readable recording medium may be distributed in computer systems connected through a network so that the computer-readable code may be stored and executed in a distributed manner. The computer-readable recording medium may be readable by a computer, and the computer-readable code may be stored in the memory and be executed on the processor.

The example embodiments may be implemented by functional block components and various processing operations. These functional blocks may be implemented in any number of hardware and/or software configurations which perform specific functions. For example, the example embodiments may employ integrated circuit components, such as a memory, processing, a logic, a look-up table, and the like, capable of executing various functions under the control of one or more microprocessors or by other control devices. Similar to that components may be implemented as software programming or software components, the example embodiments may include various algorithms implemented as data structures, processes, routines, or a combination of other programming components and may be implemented in a programming or scripting language such as C, C++, Java, assembler, or the like. The functional aspects may be implemented as algorithms executed on one or more processors. In addition, the example embodiments may employ the related art for an electronic environment setting, signal processing, and/or data processing. The terms such as a "mechanism," an "element," a "part," and a "component" may be used broadly and may be not limited to mechanical and physical components. These terms may include the meaning of a series of routines of software in association with a processor or the like.

The above-described example embodiments are merely examples, and other embodiments may be implemented within the scope of the appended claims which will be described below.

## Claims

1. A computer-implemented method of training a neural network model for predicting a click-through rate (CTR) of a user in an electronic device, the method comprising:

   mapping a feature included in a feature vector to an embedding vector;
   normalizing the embedding vector on the basis of a feature-wise linear transformation parameter; and
   inputting the normalized embedding vector into a neural network layer,
   wherein the feature-wise linear transformation parameter is defined such that the same value is applied to all elements of the embedding vector during the normalizing.

2. The computer-implemented method of claim 1, wherein the normalizing include:

   calculating a mean of the elements of the embedding vector;
   calculating a variance of the elements of the embedding vector; and
   normalizing the embedding vector on the basis of the mean, the variance, and the feature-wise linear transformation parameter.

3. The computer-implemented method of claim 1 or 2, wherein the feature-wise linear transformation parameter includes a scale parameter and a shift parameter.

4. The computer-implemented method of claim 3, wherein each of the scale parameter and the shift parameter is a vector having the same dimension as the embedding vector, and all elements thereof has the same value.

5. The computer-implemented method of claim 3, wherein each of the scale parameter and the shift parameter has a scalar value.

6. The computer-implemented method of any of the claims 1 to 5, wherein the normalizing is an operation of performing calculation of Equation 1 below:

Equation 1

$$EN(e_x) = \gamma_x^f \left( \frac{e_x - \mu_x}{\sqrt{\sigma_x^2 + \epsilon}} \right) + \beta_x^f,$$

$$\mu_x = \frac{1}{d} \sum_k (e_x)_k, \quad \sigma_x^2 = \frac{1}{d} \sum_k ((e_x)_k - \mu_x)^2.$$

wherein, in Equation 1, $e_x$ is the embedding vector, d is a dimension of the embedding vector, $\mu_x$ is the mean of all the elements of the embedding vector, $\sigma_x^2$ is the variance of all the elements of the embedding vector, $(e_x)_k$ is a $k^{th}$ element of the embedding vector $e_x$, and each of $\gamma_x^f$ and $\beta_x^f$ is the feature-wise linear transformation parameter.

7. A computer-implemented method of any of the claims 1 to 6, further comprises:

   generating new feature-wise linear transformation parameter based on the result of normalizing the embedding vector and the feature-wise linear transformation parameter used for normalizing the embedding vector;
   mapping a further feature included in a further feature vector to a further embedding vector;
   normalizing the further embedding vector on the basis of the new feature-wise linear transformation parameter; and
   inputting the further normalized embedding vector into a neural network layer for training the neural network model.

8. A computer program stored in a computer-readable recording medium in combination with hardware to execute the computer-implemented method of any of the claims 1 to 7.

9. A neural network system for predicting a click through rate (CTR) of a user implemented by at least one electronic device, the neural network system comprising:

   an embedding layer;
   a normalization layer; and
   a neural network layer model,
   wherein the embedding layer is configured to map a feature included in a feature vector to an embedding vector,
   the normalization layer is configured to normalize the embedding vector on the basis of a feature-wise linear transformation parameter,
   the neural network layer is configured to perform a neural network operation on the basis of the normalized embedding vector,
   the feature-wise linear transformation parameter is defined such that the same value is applied to all elements of the embedding vector in the normalization process.

10. The neural network system of claim 8, wherein the normalization layer is configured to calculate a mean of the elements of the embedding vector, to calculate a variance of the elements of the embedding vector, and to normalize the embedding vector on the basis of the mean, the variance, and the feature-wise linear transformation parameter.

11. The neural network system of claim 9 or 11, wherein the feature-wise linear transformation parameter includes a scale parameter and a shift parameter.

12. The neural network system of claim 11, wherein each of the scale parameter and the shift parameter is a vector in the same dimension as the embedding vector, and all elements thereof has the same value.

13. The neural network system of claim 11, wherein each of the scale parameter and the shift parameter has a scalar value.

14. The neural network system of any of the claims 9 to 13, wherein the normalization layer is configured to perform calculation of Equation 2 below:

## Equation 2

$$EN(e_x) = \gamma_x^f \left( \frac{e_x - \mu_x}{\sqrt{\sigma_x^2 + \epsilon}} \right) + \beta_x^f,$$

$$\mu_x = \frac{1}{d} \sum_k (e_x)_k, \quad \sigma_x^2 = \frac{1}{d} \sum_k ((e_x)_k - \mu_x)^2.$$

wherein, in Equation 2, $e_x$ is the embedding vector, d is a dimension of the embedding vector, $\mu_x$ is the mean of all the elements of the embedding vector, $\sigma_x^2$ is the variance of all the elements of the embedding vector, $(e_x)_k$ is a $k^{th}$ element of the embedding vector $e_x$, and $\gamma_x^f$ and $\beta_x^f$ are the feature-wise linear transformation parameters.

# FIG. 1

Electronic device

| Processor | — 110 |

| Input/output interface | — 120 |

| Memory | — 130 |

# FIG. 2

```
                    ┌─────────────┐
                    │    Start    │
                    └─────────────┘
                           │
                           ▼
          ┌──────────────────────────────────┐
          │     Receive first training data   │─── S210
          └──────────────────────────────────┘
                           │
                           ▼
          ┌──────────────────────────────────┐
          │  Perform embedding according to   │
          │  elements of feature vector and   │─── S220
          │     generate embedding vector     │
          └──────────────────────────────────┘
                           │
                           ▼
          ┌──────────────────────────────────┐
          │  Perform embedding normalization  │
          │   on basis of embedding matrix    │─── S230
          └──────────────────────────────────┘
                           │
                           ▼
                    ┌─────────────┐
                    │     End     │
                    └─────────────┘
```

# FIG. 3

310

feature vector

Neural network model

| Embedding layer | 320 |

| Normalization layer | 330 |

| Neural network layer | 340 |

# FIG. 4

# FIG. 5

Embedding matrix →

510

(Parameter)

520

Embedding normalization layer → ••• → Normalized value

530

New parameter

# FIG. 6

Europäisches
Patentamt

European
Patent Office

Office européen
des brevets

# EUROPEAN SEARCH REPORT

**Application Number**

**EP 21 21 7866**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG ZHIQIANG ET AL: "Correct Normalization Matters: Understanding the Effect of Normalization On Deep Neural Network Models For Click-Through Rate Prediction", PROCEEDINGS OF 2020 ASSOCIATION FOR COMPUTING MACHINERY (DLP-KDD'20, [Online] 7 July 2020 (2020-07-07), pages 1-8, XP055921929, DOI: 10.1145/1122445.1122456 Retrieved from the Internet: URL:https://arxiv.org/pdf/2006.12753.pdf> [retrieved on 2022-05-17] * abstract * * page 1, left-hand column, line 1 – page 8, left-hand column, last line * ----- | 1-14 | INV. G06N3/04 G06N3/08 |
| A | LEI HUANG ET AL: "Normalization Techniques in Training DNNs: Methodology, Analysis and Application", ARXIV.ORG, CORNELL UNIVERSITY LIBRARY, 201 OLIN LIBRARY CORNELL UNIVERSITY ITHACA, NY 14853, 27 September 2020 (2020-09-27), XP081772432, * abstract * * page 1, left-hand column, line 1 – page 15, right-hand column, last line * ----- -/-- | 1-14 | TECHNICAL FIELDS SEARCHED (IPC) G06N |

The present search report has been drawn up for all claims

| Place of search | Date of completion of the search | Examiner |
|---|---|---|
| The Hague | 23 May 2022 | Totir, Felix |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 21 21 7866

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | YI JOONYOUNG ET AL: "Embedding Normalization: Significance Preserving Feature Normalization for Click-Through Rate Prediction", 2021 INTERNATIONAL CONFERENCE ON DATA MINING WORKSHOPS (ICDMW), IEEE, 7 December 2021 (2021-12-07), pages 75-84, XP034072391, DOI: 10.1109/ICDMW53433.2021.00016 [retrieved on 2022-01-12] * abstract * * page 75, left-hand column, line 1 – page 82, right-hand column, last line * | 1-14 | |
| T | Zheng Zangwei ET AL: "CowClip: Reducing CTR Prediction Model Training Time from 12 hours to 10 minutes on 1 GPU", , 22 April 2022 (2022-04-22), pages 1-21, XP055921938, Retrieved from the Internet: URL:https://arxiv.org/pdf/2204.06240.pdf [retrieved on 2022-05-17] * abstract * * page 1, line 1 – page 10, line 5 * | 1-14 | |
| A | US 2018/204111 A1 (ZADEH LOTFI A [US] ET AL) 19 July 2018 (2018-07-19) * abstract; figures 1-14(d) * * line 1616 – line 1653 * | 1-14 | TECHNICAL FIELDS SEARCHED (IPC) |

The present search report has been drawn up for all claims

| Place of search | Date of completion of the search | Examiner |
|---|---|---|
| The Hague | 23 May 2022 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 7866

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2022

| Patent document cited in search report | Publication date | Patent family member(s) | Publication date |
|---|---|---|---|
| US 2018204111 A1 | 19-07-2018 | NONE | |

EPO FORM P0459

**EP 4 024 285 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200188326

24